# EUROPEAN PATENT SPECIFICATION

(11) **EP 3 342 609 B1**
(45) Date of publication and mention of the grant of the patent: **13.11.2019**
(21) Application number: 17209881.6
(22) Date of filing: 21.12.2017
(51) Int. Cl.: B60J 5/06, B60J 5/04

(54) **IMPROVED DOOR FOR ROAD VEHICLE**
VERBESSERTE TÜR FÜR STRASSENFAHRZEUG
PORTE AMÉLIORÉE POUR VÉHICULE ROUTIER

(30) Priority: 21.12.2016 IT 201600129568
(43) Date of publication of application: 04.07.2018
(73) Proprietor: IVECO FRANCE S.A.S., 69200 Vénissieux (FR)
(72) Inventor: CODRON, Stephane, 69008 LYON (FR)
(74) Representative: Bongiovanni, Simone

(56) References cited:
- DE-A1-102005 050 255
- FR-A1- 2 742 386
- FR-A1- 2 919 529
- FR-A1- 2 920 113
- US-A- 2 956 836
- US-A1- 2004 021 343

## Description

### PRIORITY CLAIM

This application claims priority from Italian Patent Application No. 102016000129568 filed on December 21, 2016.

The present invention relates to a door for a vehicle, particularly a door for a large road vehicle.

Doors of large road vehicles, for example buses or coaches, usually employ one of two alternative opening systems.

The first system uses a so-called "inswinging door", which opens by folding inwards into the vehicle's interior. This system usually takes up a lot of space inside the vehicle and may obstruct passengers boarding or alighting from the vehicle.

Another system uses a so-called "outswinging door", which opens towards the outside, at first moving towards the passengers and then turning outwards towards one of the vehicle's wheels.

This system has the disadvantage of requiring a
preventive manoeuvre of the wheels so that they are straight to ensure that the door panels can open. In fact, the distance between each of the door panels and the wheels is less than the required opening space for the panel and thus if the wheel were not straight it would prevent the door from opening.

This therefore requires the vehicle's driver to make a very careful manoeuvre and also it makes it impossible for the vehicle to stop on a curve.

Finally, opening the panels towards the passengers obstructs them when they are boarding the bus, especially if there are many passengers.

Examples of known doors for public transport vehicles are disclosed in documents FR2920113 A1, FR2919529 A1, US2956836 A, DE102005050255 A1, FR2742386 A1 or US2004021343 A1.

Existing doors must therefore be improved in order to provide for opening the door panels in such a way that passengers can access the bus even if the wheels are not straight and also so that they present a minimal obstruction in the vehicle's interior.

The objects of this invention are to resolve the abovementioned problems.

The above-mentioned objects are achieved by a door according to claim 1 and a method according to claim 7.

Other characteristics and advantages of the invention will become apparent from the following non-limiting description, provided for illustrative purposes, with reference to the attached drawings, in which:
- Figure 1 is a perspective view of a public transport vehicle comprising a closed door according to the present invention;
- Figures 2-5 are perspective views of the vehicle of Figure 1 in different phases of opening of the door according to the present invention; and
- Figures 6a-6d are perspective views of the vehicle of Figure 1 in different steps of closing of the door according to the present invention.

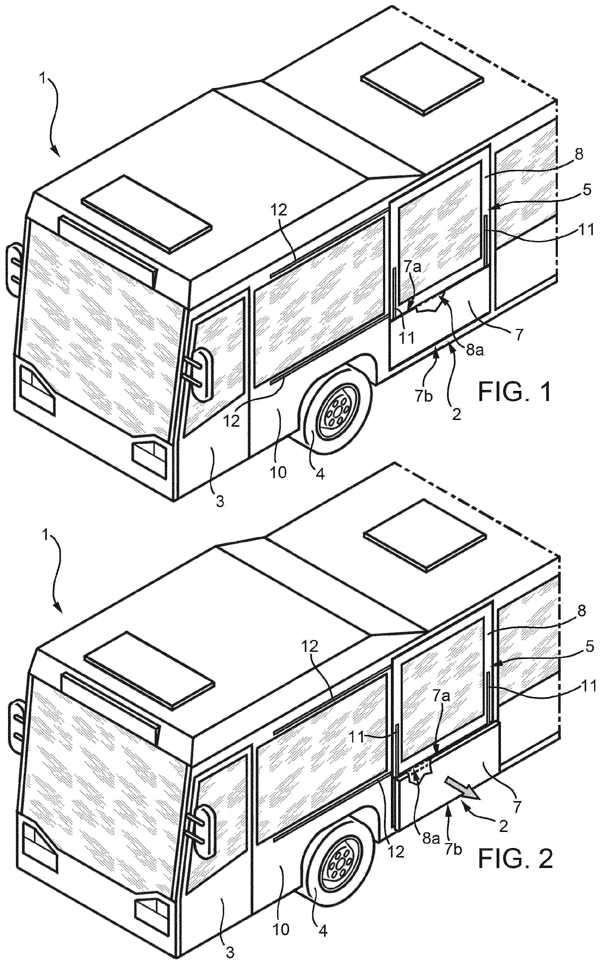

Figure 1 shows a vehicle 1 comprising a central entrance 2 between a rear entrance (not shown) and a front entrance 3. The central entrance 2 is positioned in close proximity to a wheel 4 of the vehicle 1 and is closed by a door 5.

The door 5 comprises two panels, respectively a lower panel 7 and an upper panel 8. Specifically, when the door 5 is closed, the lower panel 7 is positioned vertically below the panel 8 so that a top edge 7a of the lower panel is touching a bottom edge 8a of the upper panel 8.

The lower panel 7 is preferably shorter than the upper panel 8 in the vertical dimension and its extension in this dimension is greater than or equal to the diameter of the wheel 4. The lateral dimension of the two door panels 7, 8 is preferably between 900mm and 1300 mm.

The vehicle also comprises operating means (not shown) configured to move the door panels 7, 8.

More specifically, the operating means are configured to move the lower panel 7 in a transverse direction towards the exterior of the vehicle 1 and in a vertical direction in order to completely superimpose it over the upper panel 8.

With the lower panel 7 in this position, a bottom edge 7b of the lower panel 7 is positioned facing the bottom edge 8a of the upper panel 8.

In addition, the operating means are configured to move the upper panel 8 in a transverse direction towards the exterior of the vehicle 1 and in a lateral direction on an external wall 10 of the vehicle 1 in order to position the upper panel 8 above the wheel 4 in order to leave the entrance 2 completely unobstructed.

The operating means are of known type, for example they may be an electric motor or a pneumatic system.

The upper panel 8 preferably comprises guide rails 11 in which the lugs (not shown) of the lower panel 7 can slide in order to guide its superimposition over the upper panel 8.

Similarly, the side wall 10 preferably comprises guide rails 12 in which the lugs (not shown) of the upper door 8 can slide in order to position it above the wheel 4.

The door 5 functions as follows.

In an initial state (Figure 1) the door 5 is closed.

In a first opening step (Figure 2), the lower panel 7 is pushed towards the exterior of the vehicle 1 so as to allow the lower panel 7 to slide over the upper panel 8.

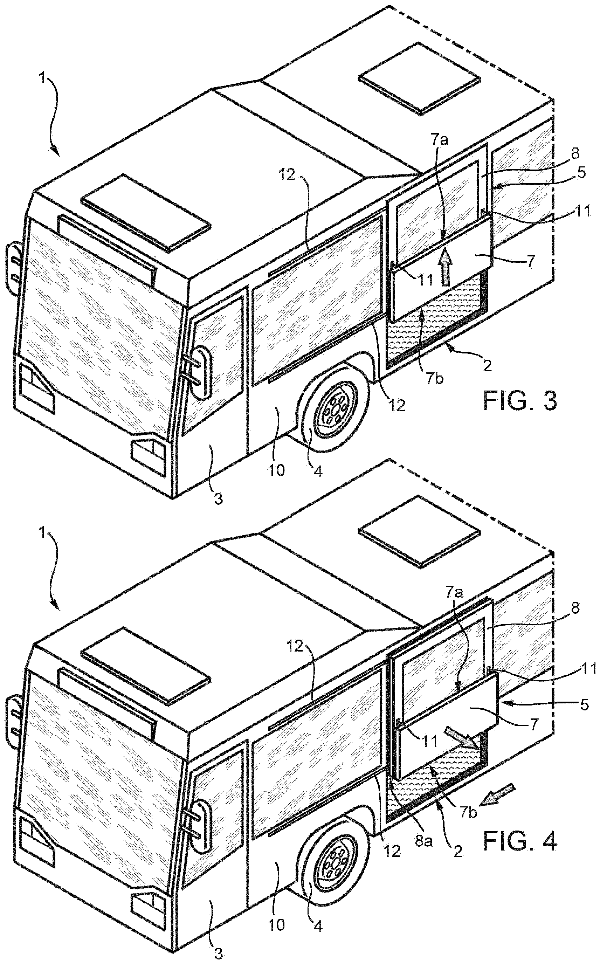

In a second opening step (Figure 3), the lower panel 7 slides over the upper panel 8 so that the bottom edge 8a of the upper panel 8 is positioned facing the bottom edge 7a of the lower panel 7. When this position has been achieved, the lower panel 7 is kinematically coupled to the upper door 8, thanks to selective attachment means (not shown), for example the use of catches.

In a third opening step (Figure 4), the upper panel 8 (coupled to the lower panel 7) is pushed towards the exterior of the vehicle 1 so as to allow the upper panel 8 to slide along the lateral wall 10.

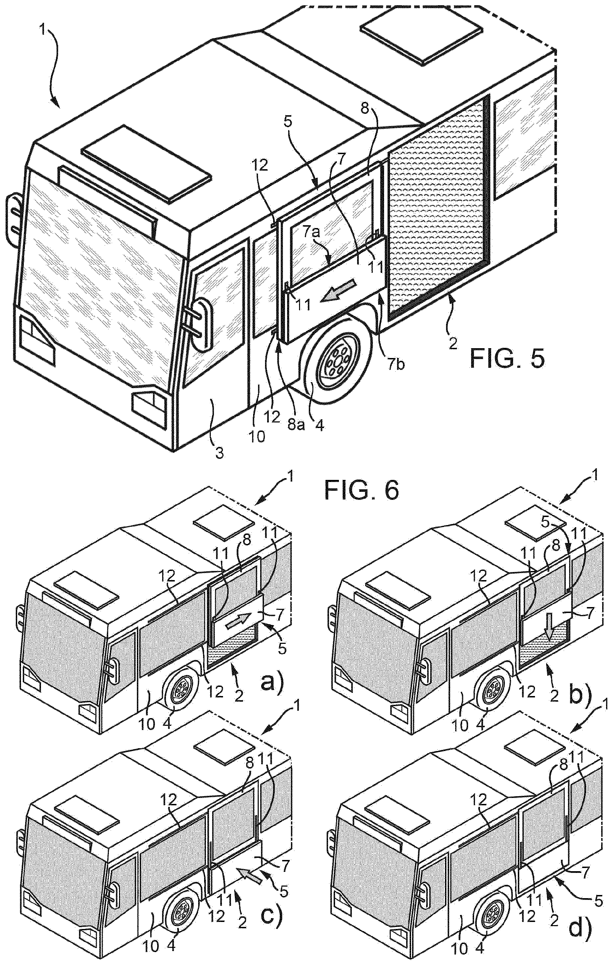

In a fourth opening step (Figure 5), the upper panel 8 (coupled to the lower panel 7) slides along the lateral wall 10 until the central entrance is completely open.

As shown in Figures 6a-6b, the closing of the door 5 mirrors the opening described above; in the interests of brevity, the closing of the door 5 will therefore not be described.

From the foregoing, the benefits of a door 5 according to the present invention are apparent.

The door 5 ensures that the door panels 7, 8 can be opened even if the wheels 4 of vehicle 1 are not straight.

In addition, in sliding laterally over the exterior wall 10 of the vehicle 1, the door does not obstruct passengers boarding the vehicle, neither does it take up space inside the vehicle 1.

Finally, it is apparent that the door 5 according to the present invention may be subject to modifications and variations without thereby departing from the protective scope of the claims.

For example, the guide rails 11, 12 could be absent or replaced with equivalent devices.

The door 5 could also be used as the vehicle's front or rear entrance.

## Claims

1. A door (5) for a vehicle (1) comprising a first panel (8) and a second panel (7), in which in a closed position of the door (5), the first panel (8) is positioned vertically above the second panel (7) so that a lower edge (8a) of the first panel (8) touches an upper edge (7a) of the second panel (7) **characterized in that**, in an open position of the said door (5), the second panel (7) is arranged so as to be completely superimposed over the first panel (8) so that a lower edge (7b) of the second panel (7) is positioned in front of a lower edge (8a) of the first panel (8), the lower edges (7b, 8a) of the two panels (7, 8) being positioned vertically above a wheel (4) of the said vehicle (1), the first panel (8) being configured to move laterally with respect to a lateral wall (10) of the vehicle (1) until it is above the said wheel (4).

2. The door according to claim 1, **characterised in that** movements of the second panel (7) over the first panel (8) and of the first panel (8) over the lateral wall (10) of the vehicle are carried out by operating means.

3. The door according to claim 2, **characterised in that** the operating means are at least one of either an electric motor or a pneumatic system.

4. The door according to one of the preceding claims, **characterised in that** the first panel (8) comprises guide rails (11) located on the outer wall of the said first panel (8) and configured to allow movement of the second panel (7) over the said first panel (8).

5. The door according to one of the preceding claims, **characterised in that** the lateral wall (10) of the vehicle (1) comprises guide rails (12) configured to allow movement of the said first panel (8) over the said lateral wall (10).

6. The door according to one of the preceding claims, **characterised in that** the second panel (7) is vertically shorter than the first panel (8), the vertical extension of the said second panel (7) being at least equal to the diameter of the said wheel (4).

7. The door according to one of the preceding claims, **characterised in that** the lateral dimension of the said panels (7, 8) is between 900 mm and 1300 mm.

8. A method of opening a door for a vehicle (1) comprising a first panel (8) and a second panel (7) **characterised in that** the method comprises the following steps:
- movement of the second panel (7) towards the outside of the vehicle with respect to the first panel (8);
- vertical movement of the second panel (7) with respect to the first panel (8) until a lower edge (8a) of the first panel (8) is in a position facing the lower edge (7b) of the second panel (7);
- horizontal movement of the first panel (8), kinematically coupled to the second panel (7), with respect to a lateral wall (10) of the said vehicle (1) so that it moves laterally until it is above one of the wheels (4) of the said vehicle (1).

## Patentansprüche

1. Eine Tür (5) für ein Fahrzeug (1), umfassend ein erstes Türblatt (8) und ein zweites Türblatt (7), wobei bei einer geschlossenen Position der Tür (5) das erste Türblatt (8) vertikal über dem zweiten Türblatt (7) positioniert ist, sodass ein unterer Rand (8a) des ersten Türblatts (8) einen oberen Rand (7a) des zweiten Türblatts (7) berührt, **dadurch gekennzeichnet,**
**dass** in einer offenen Position der Tür (5) das zweite Türblatt (7) so platziert ist, dass es komplett über dem ersten Türblatt (8) liegt, sodass ein unterer Rand (7b) des zweiten Türblatts (7) vor einem unteren Rand (8a) des ersten Türblatts (8) liegt, wobei die unteren Ränder (7b, 8a) der beiden Türblätter (7, 8) vertikal über einem Rad (4) des Fahrzeugs (1) positioniert sind, wobei das erste Türblatt (8) ausgebildet ist, um eine seitliche Bewegung in Bezug auf eine Seitenwand (10) zu auszuführen, bis es über dem Rad (4) ist.

2. Eine Tür nach Anspruch 1, **dadurch gekennzeichnet, dass** Bewegungen des zweiten Türblatts (7) über das erste Türblatt (8) und des ersten Türblatts (8) über die Seitenwand (10) des Fahrzeugs von Betriebsmitteln ausgeführt werden.

3. Eine Tür nach Anspruch 2, **dadurch gekennzeichnet, dass** die Betriebsmittel mindestens eines von entweder einem elektrischen Motor oder einem pneumatischen System sind.

4. Eine Tür nach einem der vorstehenden Ansprüche, **dadurch gekennzeichnet, dass** das erste Türblatt (8) Führungsschienen (11) umfasst, platziert auf der äußeren Wand des ersten Türblatts (8) und ausgebildet um eine Bewegung des zweiten Türblatts (7) über das erste Türblatt (8) zu ermöglichen.

5. Eine Tür nach einem der vorstehenden Ansprüche, **dadurch gekennzeichnet, dass** die Seitenwand (10) des Fahrzeugs (1) Führungsschienen (12) umfasst, ausgebildet um eine Bewegung des ersten Türblatts (8) über die Seitenwand (10) zu ermöglichen.

6. Eine Tür nach einem der vorstehenden Ansprüche, **dadurch gekennzeichnet, dass** das zweite Türblatt (7) vertikal kürzer ist als das erste Türblatt (8), wobei die vertikale Abmessung des zweiten Türblatts (7) mindestens gleich dem Durchmesser des Rades (4) ist.

7. Eine Tür nach einem der vorstehenden Ansprüche, **dadurch gekennzeichnet, dass** die seitliche Abmessung der Türblätter (7, 8) zwischen 900 mm und 1300 mm ist.

8. Ein Verfahren zum Öffnen einer Tür eines Fahrzeugs (1) umfassend ein erstes Türblatt (8) und ein zweites Türblatt (7), **dadurch gekennzeichnet, dass** das Verfahren folgenden Schritte umfasst:
- Bewegung des zweiten Türblatts (7) in Richtung der Außenseite des Fahrzeugs in Bezug auf das erste Türblatt (8);
- vertikale Bewegung des zweiten Türblatts (7) in Bezug auf das erste Türblatt (8), bis ein unterer Rand (8a) des ersten Türblatts (8) sich in einer dem unteren Rand (7b) des zweiten Türblatts (7) zugewandten Position befindet;
- horizontale Bewegung des ersten Türblatts (8), kinematisch gekoppelt mit dem zweiten Türblatt (7), in Bezug auf eine Seitenwand (10) des Fahrzeugs (1), sodass es sich seitlich bewegt, bis es sich über einem der Räder (4) des Fahrzeugs (1) befindet.

## Revendications

1. Portière (5) pour un véhicule (1) comprenant un premier panneau (8) et un second panneau (7), dans laquelle, dans une position fermée de la portière (5), le premier panneau (8) est positionné verticalement au-dessus du second panneau (7) de telle sorte qu'un bord inférieur (8a) du premier panneau (8) touche un bord supérieur (7a) du second panneau (7), **caractérisée en ce que**, dans une position ouverte de ladite portière (5), le second panneau (7) est agencé de manière à ce qu'il soit complètement superposé sur le premier panneau (8) de telle sorte qu'un bord inférieur (7b) du second panneau (7) soit positionné à l'avant d'un bord inférieur (8a) du premier panneau (8), les bords inférieurs (7b, 8a) des deux panneaux (7, 8) étant positionnés verticalement au-dessus d'une roue (4) dudit véhicule (1), le premier panneau (8) étant configuré de manière à se déplacer latéralement par rapport à une paroi latérale (10) du véhicule (1) jusqu'à ce qu'il soit au-dessus de ladite roue (4).

2. Portière selon la revendication 1, **caractérisée en ce que** des déplacements du second panneau (7) sur le premier panneau (8) et du premier panneau (8) sur la paroi latérale (10) du véhicule sont mis en œuvre par un moyen d'actionnement.

3. Portière selon la revendication 2, **caractérisée en ce que** le moyen d'actionnement est au moins un moyen parmi un moteur électrique et un système pneumatique.

4. Portière selon l'une des revendications précédentes, **caractérisée en ce que** le premier panneau (8) comprend des rails de guidage (11) localisés sur la paroi externe dudit premier panneau (8) et qui sont configurés pour permettre le déplacement du second panneau (7) sur ledit premier panneau (8).

5. Portière selon l'une des revendications précédentes, **caractérisée en ce que** la paroi latérale (10) du véhicule (1) comprend des rails de guidage (12) configurés pour permettre le déplacement dudit premier panneau (8) sur ladite paroi latérale (10).

6. Portière selon l'une des revendications précédentes, **caractérisée en ce que** le second panneau (7) est plus court verticalement que le premier panneau (8), l'extension verticale dudit second panneau (7) étant au moins égale au diamètre de ladite roue (4).

7. Portière selon l'une des revendications précédentes, **caractérisée en ce que** la dimension latérale desdits panneaux (7, 8) est entre 900 mm et 1300 mm.

8. Procédé d'ouverture d'une portière pour un véhicule (1) comprenant un premier panneau (8) et un second panneau (7), **caractérisé en ce que** le procédé comprend les étapes qui suivent :
- le déplacement du second panneau (7) en direction de l'extérieur du véhicule par rapport au premier panneau (8) ;
- le déplacement vertical du second panneau (7) par rapport au premier panneau (8) jusqu'à ce qu'un bord inférieur (8a) du premier panneau (8) soit dans une position de face-à-face par rapport au bord inférieur (7b) du second panneau (7) ; et
- le déplacement horizontal du premier panneau (8), couplé cinématiquement au second panneau (7), par rapport à une paroi latérale (10) dudit véhicule (1) de telle sorte qu'il se déplace latéralement jusqu'à ce qu'il soit au-dessus de l'une des roues (4) dudit véhicule (1).
